# EUROPEAN PATENT SPECIFICATION

(11) **EP 4 389 314 B1**
(45) Date of publication and mention of the grant of the patent: **28.05.2025**
(21) Application number: 22876203.5
(22) Date of filing: 27.09.2022
(51) Int. Cl.: G06F 30/23, B21D 22/00, G06F 30/15, G06F 113/24, G06F 119/14, G06F 119/18

(54) **METHOD OF PREDICTING SHAPE CHANGE OF PRESS-FORMED PRODUCT**
FORMÄNDERUNGSVORHERSAGEVERFAHREN FÜR EIN PRESSGEFORMTES PRODUKT
PROCÉDÉ DE PRÉDICTION DE CHANGEMENT DE FORME POUR PRODUIT FORMÉ À LA PRESSE

(30) Priority: 29.09.2021 JP 2021158595
(43) Date of publication of application: 26.06.2024
(73) Proprietor: JFE Steel Corporation, Tokyo 100-0011 (JP)
(72) Inventor: FUJII, Yusuke, Tokyo 100-0011 (JP); NAKAMOTO, Taira, Tokyo 100-0011 (JP); URABE, Masaki, Tokyo 100-0011 (JP)
(74) Representative: Hoffmann Eitle
(86) International application number: PCT/JP2022/035886
(87) International publication number: WO 2023/054337

(56) References cited:
- JP-A- 2008 055 476
- JP-A- 2021 126 683
- JP-A- 2021 126 690
- JP-B1- 6 939 962
- CHEN YUAN ET AL: "Time-dependent springback prediction with stress relaxation effect for non-isothermal hot stamping of titanium alloy sheets", THE INTERNATIONAL JOURNAL OF ADVANCED MANUFACTURING TECHNOLOGY, SPRINGER, LONDON, vol. 115, no. 1-2, 12 May 2021 (2021-05-12), pages 637 - 653, XP037480438, ISSN: 0268-3768, [retrieved on 20210512], DOI: 10.1007/S00170-021-07055-W
- LIM HOJUN: "Time-dependent Springback", INTERNATIONAL JOURNAL OF MATERIAL FORMING, 3 April 2008 (2008-04-03), pages 157 - 160, XP055848159, Retrieved from the Internet <URL:https://link.springer.com/content/pdf/10.1007/s12289-008-0015-2.pdf> [retrieved on 20211006], DOI: 10.1007/s12289-008-0
- LIM H ET AL: "Time-dependent springback of advanced high strength steels", INTERNATIONAL JOURNAL OF PLASTICITY, vol. 29, 6 August 2011 (2011-08-06), pages 42 - 59, XP028121437, ISSN: 0749-6419, [retrieved on 20110806], DOI: 10.1016/J.IJPLAS.2011.07.008
- JIANG HAO-JIE ET AL: "A novel model to predict U-bending springback and time-dependent springback for a HSLA steel plate", THE INTERNATIONAL JOURNAL OF ADVANCED MANUFACTURING TECHNOLOGY, SPRINGER, LONDON, vol. 81, no. 5, 16 May 2015 (2015-05-16), pages 1055 - 1066, XP035573660, ISSN: 0268-3768, [retrieved on 20150516], DOI: 10.1007/S00170-015-7274-0
- JEUNECHAMPS ET AL: "A closed form technique to predict springback in creep age-forming", INTERNATIONAL JOURNAL OF MECHANICAL SCIENCES, PERGAMON PRESS, OXFORD, GB, vol. 48, no. 6, 1 June 2006 (2006-06-01), pages 621 - 629, XP005343122, ISSN: 0020-7403, DOI: 10.1016/J.IJMECSCI.2006.01.005
- HAMA TAKAYUKI, SUZUKI TOMOTAKA, NAKATSUJI YUYA, SAKAI TAKEYUKI, TAKUDA HIROHIKO: "Time-Dependent Springback of Various Sheet Metals: An Experimental Study", MATERIALS TRANSACTIONS, THE JAPAN INSTITUTE OF METALS AND MATERIALS, 1 May 2020 (2020-05-01), pages 941 - 947, XP055891273, Retrieved from the Internet <URL:https://www.jstage.jst.go.jp/article/matertrans/61/5/61_MT-M2019283/_pdf/-char/en> [retrieved on 20220214], DOI: 10.2320/matertrans.MT-M2019283

## Description

### Field

The present invention relates to a method of predicting a shape change of a press-formed product, and particularly, to a method of predicting a shape change of a press-formed product in which press forming is performed to form a press-formed product having a bend and a shape change of the press-formed product after being removed from a die and subjected to spring back is predicted. Background

Press forming is a manufacturing method in which metal components can be manufactured at low cost in a short time, and is used for manufacturing many automobile components. In recent years, metal sheets having higher strength have been used in press forming of automobile components in order to achieve both improvement in collision safety performance of an automobile and weight reduction of a vehicle body.

One of the main problems in a case of performing press forming on a metal sheet having high strength is deterioration in dimensional accuracy due to spring back. A phenomenon in which residual stress generated in a press-formed product at the time when a metal sheet is deformed by press forming serves as driving force and the press-formed product removed from a die instantaneously returns to a shape of the metal sheet before the press forming like a spring is called spring back. A metal sheet having higher strength (e.g., high-tensile steel sheet) has larger residual stress generated by press forming, and thus undergoes a larger shape change due to spring back. Therefore, a metal sheet having higher strength has difficulty in keeping the shape thereof after spring back within a specified dimension.

The shapes of press-formed products removed from dice and subjected to spring back have been predicted by performing press forming simulation in which press forming analysis and spring back analysis are integrated. There are, however, a press-formed products in which shape prediction accuracy through the press forming simulation is deteriorated in a case where the shape of a press-formed product predicted through the press forming simulation is compared with the shape of a press-formed product actually subjected to press forming (hereinafter, sometimes referred to as "actual press-formed product"). In addition, investigating the cause of the deterioration in the shape prediction accuracy through the press forming simulation has revealed that this is because the actual press-formed product has a different shape between immediately after press forming (immediately after being removed from die and subjected to spring back) and after the elapse of several days even in a case of the same press-formed product.

Although such a shape change with the elapse of time units of a press-formed product seems to be similar to a phenomenon, like a creep phenomenon, in which a structural member that continues to receive a high load from the outside gradually deforms (e.g., Patent Literature 1), this shape change occurs in a press-formed product that receives no load from the outside, and is considered to be different from the phenomenon. That is, the shape change of a press-formed product subjected to spring back with the elapse of time units occurs without receiving a load from the outside. Thus, a method of analyzing a shape change due to the creep phenomenon cannot be applied when an attempt is made to predict a shape change of a press-formed product with the elapse of time units.

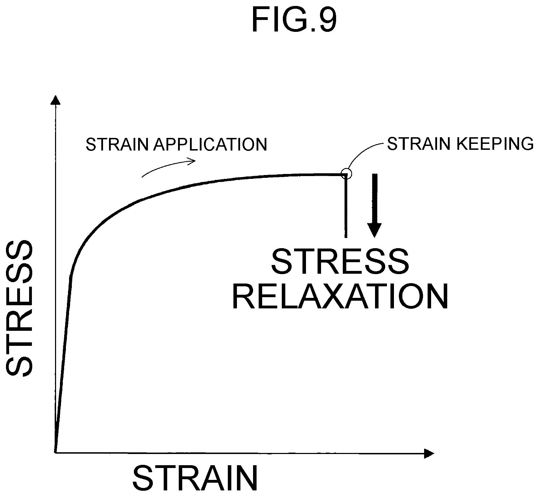

Therefore, the inventors in Patent Literature 1 propose a method of predicting a shape change with the elapse of time units after spring back based on the above-described assumption in light of the following study. Specifically, the inventors first focused on a stress relaxation phenomenon in which stress gradually decreases with the elapse of time in a case where strain is applied to a metal sheet and kept constant as illustrated in FIG. 9. Then, the inventors have found that residual stress of a press-formed product after spring back decreases with the elapse of time units and the stress relaxation causes the shape of the press-formed product to change to be balanced with the moment of the relaxed stress.

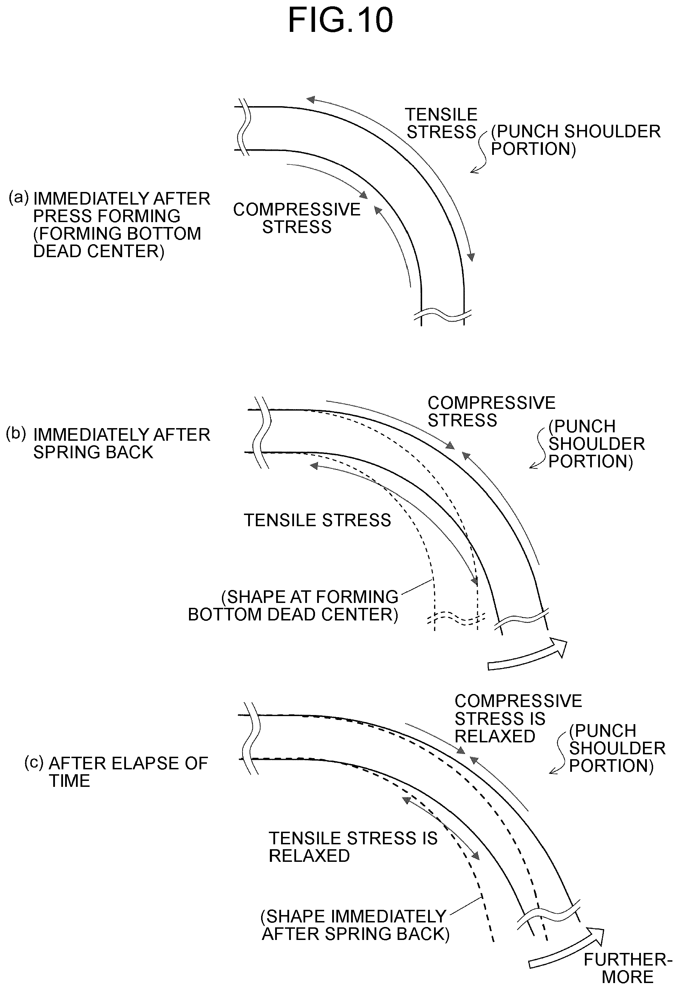

Furthermore, the inventors described in Patent Literature 2 describe the cause of the above-described shape change with the elapse of time as follows by using the change in internal stress of a punch shoulder portion in the schematic view of FIG. 10 corresponding to FIG. 13 of Patent Literature 2. Since the metal sheet is bent as illustrated in FIG. 10(a) during press forming, tensile stress is generated on the bending outside, and compressive stress is generated on the bending inside (first stage). Next, when a formed product is removed from a die, spring back occurs by using internal stress during press forming as driving force. In that case, as illustrated in FIG. 10(b), an angle changes so that the metal sheet returns to a flat state before being formed. When an angle changes to a state in which internal stress of the bent metal sheet is balanced, the metal sheet remains in a shape in the middle of the forming (second stage). That is, the moment of force in the sheet thickness direction becomes zero. In forming simulation, a shape in which the moment of force becomes zero is calculated to predict the shape. Then, when the internal stress of the metal sheet is weakened as illustrated in FIG. 10(c) with the elapse of time, the shape further changes so that the internal stress of the metal sheet is balanced (third stage).

The above-described phenomenon in the third stage is completely different from the behavior of the spring back due to the reduction in residual stress in the conventional second stage. In the conventional behavior of spring back, in relation to residual stress generated at the bottom dead center after press forming, when residual stress to be generated is reduced by a forcible means from the outside or when the difference between residual stress to be generated on the front side of the press-formed product and that on the back side thereof is reduced, spring back after removal from a die is inhibited as a result, and the press-formed product approaches a target shape.

In contrast, in the behavior of stress relaxation targeted by the invention according to Patent Literature 2, remaining residual stress is further relaxed without being forced from the outside after removal from a die and occurrence of spring back after press forming. As a result, the press-formed product tries to return to a state without residual stress. The press-formed product has further increased bending angle and warpage as compared to that immediately after spring back, for example. The press-formed product has a shape far from a target shape, and has a different shape completely opposite to the conventional shape based on spring back inhibition.

The inventors in Patent Literature 2 have studied a method of predicting a shape change due to stress relaxation after spring back based on the above-described findings, and have proposed a method of predicting a shape change of a press-formed product including a shape/residual stress acquisition step S1 immediately after spring back, a residual stress relaxation reduction setting step S3, and a shape analysis step S5.

CHEN YUAN ET AL: "Time-dependent springback prediction with stress relaxation effect for non-isothermal hot stamping of titanium alloy sheets", THE INTERNATIONAL JOURNAL OF ADVANCED MANUFACTURING TECHNOLOGY, SPRINGER, LONDON, vol. 115, no. 1-2, 12 May 2021 (2021-05-12), pages 637-653, XP037480438, discloses performing tensile tests with different temperature and strain rates, and stress relaxation tests with different temperature and initial stress levels in Gleeble system. An integrated physically based constitutive model is developed to describe both the thermo-mechanical behavior and time-dependent stress relaxation in hot stamping process. Furthermore, the proposed model is implemented in the hot stamping simulations of U-shape part through user subroutines. The essential effect of stress relaxation on stress evolutions of U-shape part is analyzed. The simulation results show promising agreement with experiments when stress relaxation is taken into account. Finally, based on the principle of increasing temperature to enhance stress relaxation, increasing the forming speed is found to be an effective way to reduce the springback of titanium alloy in hot stamping.

Lim Hojun: "Time-dependent Springback", International Journal of Material Forming, 3 April 2008 (2008-04-03), pages 157-160, XP055848159, discloses the measurement of time-dependent behaviour of four advanced high strength steel and creep-simulation for various test conditions.

LIM H ET AL: "Time-dependent springback of advanced high strength steels", INTERNATIONAL JOURNAL OF PLASTICITY, vol. 29, pages 42-59, XP028121437, discloses time-dependent springback of advanced high strength steels.

### Citation List

### Patent Literature

Patent Literature 1: Japanese Patent No. 6888703
Patent Literature 2: JP 2021-133374 A

### Summary

### Technical Problem

The present inventors of the present invention performed forming simulation for various components, and predicted a shape change with the elapse of time by a method disclosed in Patent Literature 2. The present inventors have found that an accuracy of prediction of a shape change may be deteriorated in a press-formed product having a bend, particularly, a component in which a shape change of a punch shoulder portion greatly influences dimensional accuracy.

The present invention has been made to solve the above-described problem, and an object thereof is to provide a method of predicting a shape change of a press-formed product in which the shape change of the press-formed product having the bend with the elapse of time units after spring back is accurately predicted.

### Solution to Problem

To solve the problem and achieve the object, a method of predicting a shape change of a press-formed product according to the present invention is the method being configured to predict a shape change after elapse of time units of a press-formed product which has been obtained by performing press forming on a metal sheet and subjected to spring back at a moment when the metal sheet was removed from a die. The method includes: a generation step of generating a blank model which is an analysis model for a blank being a metal sheet used in press forming, the blank model being divided into a plurality of pieces in a sheet thickness direction such that the blank model can be analyzed; an acquisition step of acquiring a shape and residual stress in the sheet thickness direction of the press-formed product immediately after the spring back by performing press forming analysis and spring back analysis using the blank model and a die model obtained by modeling a die used in the press forming; a setting step of setting a value of residual stress relaxed and reduced as compared to the acquired residual stress of the press-formed product immediately after the spring back, to an element or an integration point of a sheet thickness surface layer of the press-formed product immediately after spring back; and a shape analysis step of determining a shape in which moment of force is balanced in the press-formed product for which a value of residual stress of only the sheet thickness surface layer has been set to be relaxed and reduced.

Moreover, in the setting step, residual stress of an element or an integration point of a sheet thickness surface layer of the press-formed product immediately after spring back may be reduced and set at a predetermined percentage.

Moreover, in the setting step, residual stress may be reduced and set at a predetermined percentage for a portion at which a metal sheet is subjected to bending deformation during the press forming.

Moreover, the blank may be a metal sheet having a tensile strength of 150 MPa-grade to 2000 MPa-grade. Advantageous Effects of Invention

According to the method of the present invention, it is possible to accurately predict a shape change of, particularly, a component having a bent portion with a cross-sectional shape such as a U shape, a Z shape, and a hat shape with the elapse of time after spring back after the component is subjected to press forming and removed from a die. Then, a component having excellent dimensional accuracy can be manufactured by performing press forming preliminarily using the prediction result. This improves the accuracy of a shape obtained by combining components in a vehicle body assembly step, eliminates defects of joining such as spot welding and laser welding, facilitates the joining, and can greatly improve productivity.

### Brief Description of Drawings

FIG. 1 is a flowchart illustrating a flow of processing of a method of predicting a shape change of a press-formed product according to an embodiment of the present invention.
FIG. 2 is an explanatory diagram illustrating how residual stress in a sheet thickness direction of the press-formed product changes.
FIG. 3 is an explanatory diagram of a method of relaxing and reducing residual stress in a conventional example.
FIG. 4 is an explanatory diagram of element division in the sheet thickness direction in an analysis model for a blank.
FIG. 5 is an explanatory view of a press-formed product targeted in Example 1.
FIG. 6 is an explanatory diagram illustrating a shape change in the press-formed product in FIG. 5.
FIG. 7 is an explanatory view of a press-formed product in Example 2.
FIG. 8 is an explanatory view of a press-formed product in Example 3.
FIG. 9 is a stress-strain diagram illustrating a stress relaxation phenomenon in which stress is relaxed and reduced with the elapse of time with strain being kept constant.
FIG. 10 illustrates stress and a shape change in a punch shoulder portion, which is a bent portion of a press-formed product having the bent portion ((a) immediately after press forming, (b) immediately after spring back, and (c) after elapse of time).

### Description of Embodiments

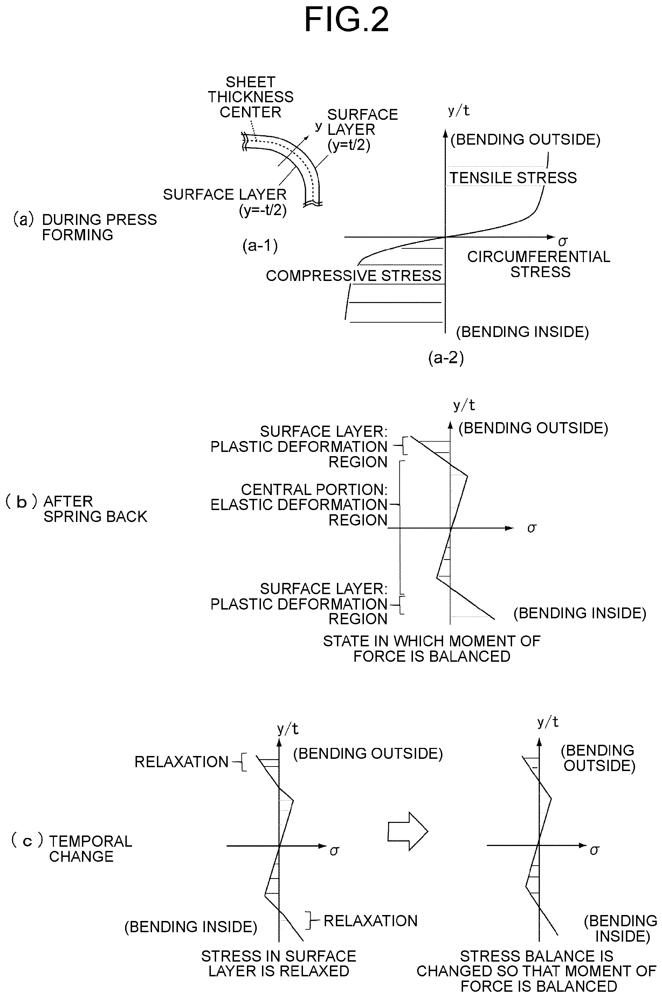

Prior to the description of an embodiment, how the present invention has been made will be described. As described above, according to the method of Patent Literature 1, an accuracy of prediction of a shape change may be deteriorated in a press-formed product having a bent portion, particularly, a component in which a shape change of the bent portion greatly influences dimensional accuracy. Therefore, the present inventors investigated a case where the prediction accuracy is deteriorated, and have found the cause. This point will be described with reference to FIG. 2.

In graphs of (a) to (c) in FIG. 2, horizontal axes represent circumferential stress of a metal sheet subjected to bending deformation, and vertical axes represent a value obtained by dividing a distance y in a sheet thickness direction from the sheet thickness center of the metal sheet by a sheet thickness t (see FIG. 2(a-2)). In the distance y in the sheet thickness direction, a value of + (plus) indicates a bending outside, and a value of - (minus) indicates a bending inside. During press forming of a first stage (see FIG. 10(a)), as illustrated in FIG. 2(a-1), the bending deformation causes tensile stress on the outside (y/t > 0) of the metal sheet and compressive stress on the inside (y/t < 0) of the metal sheet. After spring back of a second stage (see FIG. 10(b)), as illustrated in FIG. 2(b), internal stress changes so that the moment of force in the sheet thickness direction becomes zero. In this case, the positive and negative of the stress are reversed in a sheet thickness surface layer. The compressive stress is generated on the outside of the metal sheet. The tensile stress is generated on the inside thereof. Furthermore, in the sheet thickness surface layer, stress often changes to cause plastic deformation at the time when the stress is reversed. In contrast, only elastic deformation occurs at a sheet thickness central portion.

Since relaxation and reduction of the internal stress of the metal sheet after the elapse of time of a third stage (see FIG. 10(c)) are accompanied by a shape change, the relaxation and reduction are generated at a stress level at which not the elastic deformation but the plastic deformation occurs. Thus, only the stress in the sheet thickness surface layer is relaxed in a temporal change as illustrated in FIG. 2(c), and the balance of the moment of force in the sheet thickness direction is lost, which changes the shape.

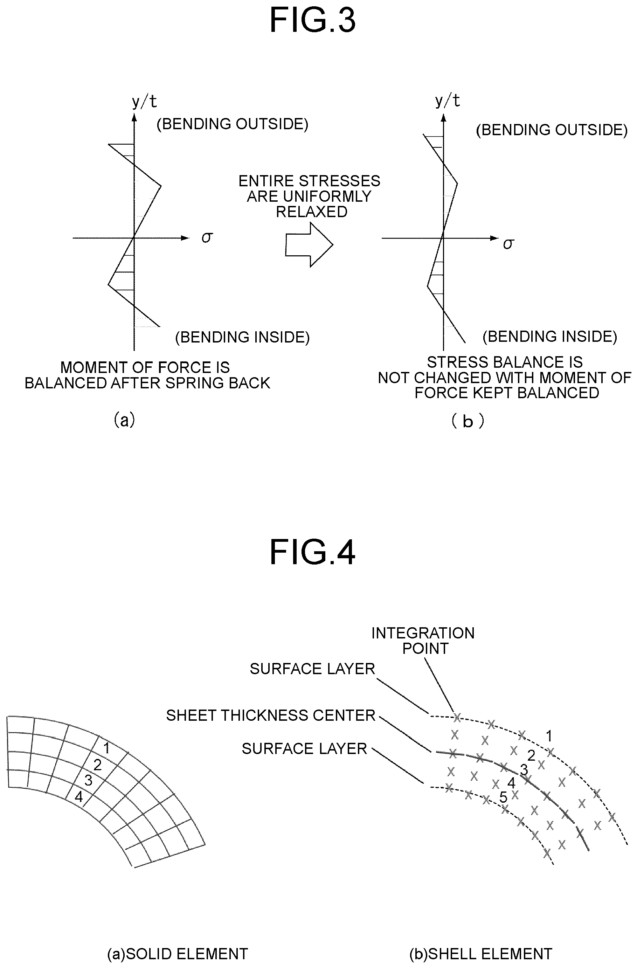

In contrast to the above, in the method described in Patent Literature 1, as illustrated in FIG. 3, the temporal change is predicted by relaxing all stresses in the sheet thickness direction. The method uses a mechanism different from that for relaxing actually generated stress described above. Thus, shape prediction accuracy is estimated to be deteriorated. From the above, the present inventors have found that a shape change with the elapse of time can be accurately predicted by relaxing only the stress in the sheet thickness surface layer of the metal sheet.

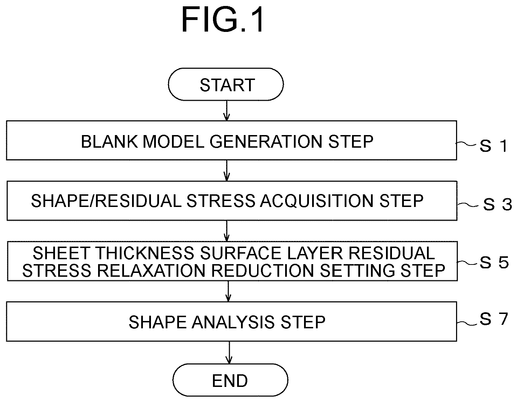

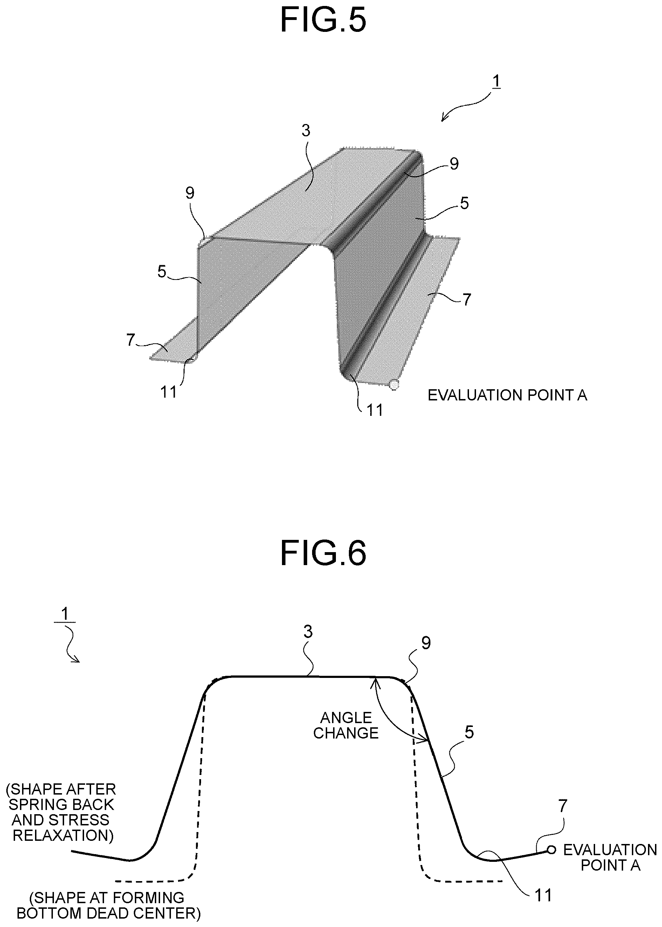

As illustrated in FIG. 1, a method of predicting a shape change of a press-formed product according to the embodiment based on the above-described study includes: a blank model generation step (hereinafter, abbreviated as generation step) (S1) of generating a blank model subjected to element division in a sheet thickness direction; a shape/residual stress acquisition step (hereinafter, abbreviated as acquisition step) (S3) of acquiring a shape/residual stress immediately after spring back; a sheet thickness surface layer residual stress relaxation reduction setting step (hereinafter, abbreviated as setting step) (S5) of setting relaxation/reduction of the residual stress of a sheet thickness surface layer; and a shape analysis step (S7) of determining a shape after a temporal change. In the embodiment, a component 1 having a hat-shaped cross section is targeted, and each of the above-described steps will be described. The component 1 having a hat-shaped cross section includes a top sheet portion 3, a vertical wall portion 5, and a flange portion 7 as illustrated in FIG. 5.

### <Generation Step>

The generation step (S1) is a step of generating a blank model. The blank model is an analysis model for a blank, which is a metal sheet used in press forming. The blank model can be analyzed by performing division into a plurality of pieces in the sheet thickness direction. In order to relax the residual stress of the sheet thickness surface layer, at least three or more divisions in the sheet thickness direction is required to distinguish the sheet thickness surface layer and the sheet thickness central portion.

Though, any number of divisions are set in the sheet thickness direction. In general, an increased number of divisions increases the prediction accuracy. In this regard, it is found, from results of examples to be described later, that seven or more divisions can more favorably improve the accuracy of shape prediction. An upper limit of the number of divisions is not particularly set. More than 50 divisions increase the calculation cost while improving the prediction accuracy only slightly. More than 50 divisions are thus not preferable.

A forming simulation through a finite element method mainly uses a solid element (FIG. 4(a)) and a shell element (FIG. 4(b)) in FIG. 4. In the solid element, the inside of a metal sheet is divided into a plurality of elements, and stress and strain of each element are calculated. FIG. 4(a) illustrates an example in which the metal sheet is divided into four pieces in the sheet thickness direction.

In a case of the shell element, as illustrated in FIG. 4(b), elements are arranged at the sheet thickness center of the metal sheet to calculate stress and strain. In that case, stress and strain in the sheet thickness direction are calculated by arranging a virtual point called an integration point in the sheet thickness direction of each element and separately calculating stress and strain at the point. Any number of integration points can be set in the sheet thickness direction. In FIG. 4(b), a total of five points are set in the sheet thickness direction: one point in each of sheet thickness surface layers, one point in the sheet thickness center, and one point between each of the sheet thickness surface layers and the sheet thickness center. In general, five or more integration points are preferably set in order to improve the prediction accuracy of a bent and deformed portion. The upper limit number of integration points is not set, but 15 or more integration points increase the calculation cost but do not improve the prediction accuracy. Thus, 15 or more integration points are not preferable.

### <Acquisition Step>

The acquisition step (S3) is a step of acquiring the shape and residual stress in the sheet thickness direction of a press-formed product immediately after spring back by performing press forming analysis and spring back analysis by using a blank model and a die model obtained by modeling a die used for press forming.

Examples of specific processing of the step include press forming simulation through the finite element method including a first stage and a second stage. In the first stage, the shape and residual stress of a press-formed product at a forming bottom dead center are determined by press forming analysis for a process of performing press forming on a metal sheet, which is a blank, to the forming bottom dead center by using a die model obtained by modeling a die used for actual press forming. In the second stage, the spring back analysis is performed. The spring back analysis is performed to determine a shape in which the moment of force is balanced in the press-formed product immediately after the press-formed product is removed from the die model at the determined forming bottom dead center.

### <Setting Step>

The setting step (S5) is a step of setting a value of residual stress relaxed and reduced as compared to residual stress of the press-formed product immediately after the spring back at an element or an integration point of the sheet thickness surface layer to the press-formed product. As described above with reference to FIG. 2, stress changes due to a temporal change in the sheet thickness surface layer in the sheet thickness direction. In the step, a value obtained by relaxing and reducing the residual stress is set to the element of the sheet thickness surface layer. For example, all bent portions, that is, sheet thickness surface layers of a punch shoulder portion 9 and a die shoulder portion 11 of the component 1 having a hat-shaped cross section are targeted as portions of the press-formed product immediately after the spring back, for which sheet thickness surface layer residual stress relaxation reduction is set.

In the example in FIG. 4(a), stresses of elements of 1 and 4 close to sheet thickness surface layers are preferably relaxed. Relaxing the stresses of elements of 2 and 3 close to the sheet thickness center relaxes stress over the entire sheet thickness direction despite that fact that elastic deformation mainly occurs at the sheet thickness center. The method is similar to that in Patent Literature 1, and is not preferable. Furthermore, when division into five pieces is performed by using the solid element, stresses of first sheet thickness surface layers, that is, elements of 1 and 5 may be relaxed. Furthermore, in the example in FIG. 4(b), 1 and 5, or 1, 2, 4, and 5 are preferably used as integration points at which stress is relaxed.

For example, an element or an integration point included in a range of 1/4 in the sheet thickness direction from the surface of a blank can be cited as one reference of the sheet thickness surface layer in which relaxation/reduction is set. For example, when the blank includes solid elements (1, 2, 3, 4, and 5 in order from outside) obtained by performing division into five pieces in the sheet thickness direction and the position of 1/4 in the sheet thickness direction covers the element 2 and a part of the element 4, the elements 1, 2, 4, and 5 are set as elements of the sheet thickness surface layers.

### <Shape Analysis Step>

The shape analysis step (S7) is a step of determining a shape in which the moment of force is balanced in a press-formed product for which a value of residual stress of the sheet thickness surface layer has been set to be relaxed and reduced. The shape of the press-formed product after a temporal change can be accurately predicted through the step.

As described above, according to a method of predicting a shape change of a press-formed product of the embodiment, a value of residual stress of a sheet thickness surface layer relaxed and reduced as compared to residual stress of the press-formed product immediately after spring back acquired by spring back analysis is set to the press-formed product. A shape in which the moment of force is balanced in the press-formed product, for which the value of residual stress of the sheet thickness surface layer has been set to be relaxed and reduced, is determined by analysis. This makes it possible to simulate stress relaxation and a shape change with the elapse of time units in an actual press-formed product and accurately predict a shape change with the elapse of time units of the press-formed product after being removed from a die and subjected to spring back.

In the above description, a value of residual stress relaxed and reduced as compared to residual stresses of sheet thickness surface layers of all bent portions in the press-formed product immediately after spring back acquired by spring back analysis, that is, the punch shoulder portion 9 and the die shoulder portion 11 of the component 1 having a hat-shaped cross section in FIG. 5 is set to the sheet thickness surface layers. In the present invention, a value obtained by relaxing and reducing residual stress of a sheet thickness surface layer of each of some bent portions of the press-formed product, for example, one of the punch shoulder portion 9 and the die shoulder portion 11 or, in a case of a component having a plurality of punch shoulder portions 9 or die shoulder portions 11, some of the punch shoulder portions 9 and the die shoulder portions 11 may be set to the bent portions.

Furthermore, the setting step (S5) in the present invention is not limited to a step of reducing residual stress of the press-formed product immediately after spring back at a predetermined percentage. The value of residual stress may be reduced by subtracting a constant value (> 0) from the absolute value of the residual stress of the whole or partial portion in the sheet thickness surface layer of the press-formed product immediately after spring back.

A specific method of subtracting a constant value from residual stress of a sheet thickness surface layer of a press-formed product as described above is required to be appropriately selected from, for example, a method in which a certain constant value is subtracted from residual stress for the entire press-formed product, a method in which a constant value is subtracted for only a portion having a predetermined value or more of residual stress, and a method in which a value to be subtracted from residual stress of each portion is changed between a portion having a predetermined value or more of residual stress and a portion having less than a predetermined value of residual stress.

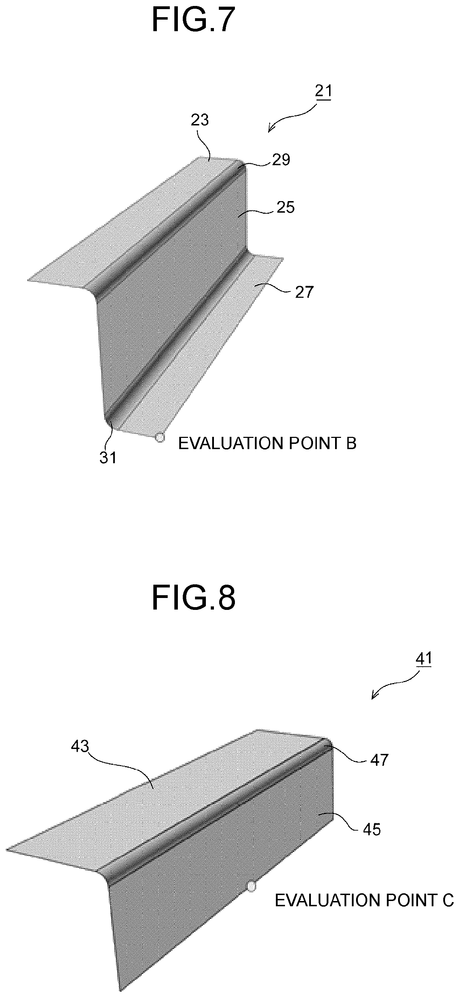

Furthermore, the present invention is not limited to those targeting the component 1 having a hat-shaped cross section as illustrated in FIG. 5. For example, the present invention can also be applied to a press-formed product such as a component 21 having a Z-shaped cross section (see FIG. 7), a component 41 having an L-shaped cross section (see FIG. 8), and a component having a U-shaped cross section. In particular, the present invention is preferably applied to a press-formed product having a shape in which residual stress is increased in a bent portion.

Furthermore, in the method of predicting a shape change of a press-formed product according to the present invention, the shape and type of a blank (metal sheet) used for press forming of the press-formed product and the press-formed product are not particularly limited. The method is more effective to an automobile component subjected to press forming using a blank in which residual stress of the press-formed product is increased.

Specifically, the blank is preferably a metal sheet having a tensile strength of 150 MPa-grade or more and 2000 MPa-grade or less and a sheet thickness of 0.5 mm or more and 4.0 mm or less. Since a blank (metal sheet) having a tensile strength of less than 150 MPa-grade is not often used for a press-formed product, there are few advantages in using the method of predicting a shape change of a press-formed product according to the present invention. When a blank has a low rigidity like an outer sheet component of an automobile, the shape of the blank easily changed due to a change in residual stress even though the blank has a tensile strength of less than 150 MPa-grade, so that there are a lot of advantages in applying the present invention, and the present invention can be preferably applied. In contrast, a blank having a tensile strength of more than 2000 MPa-grade has poor ductility. Fracture may occur in a press forming process at the punch shoulder portion 9 and the die shoulder portion 11 of the component 1 having a hat-shaped cross section as illustrated in FIG. 5 to prevent press forming.

Moreover, the present invention is preferably applied to automobile components such as an outer sheet component having a low rigidity and a skeleton component using a metal sheet having a high strength. The outer sheet component includes a door, a roof, and a hood. The skeleton component includes an A-pillar, a B-pillar, a roof rail, a side rail, a front side member, a rear side member, and a cross member. These components are types of press-formed products. The present invention can be applied to a press-formed product pressed to be formed by bending forming, form forming, or draw forming. A press method for the press-formed product is not limited.

### [Example 1]

Functions and effects of the method of predicting a shape change of a press-formed product according to the present invention have been verified, and the results will be described below. Bending forming was performed on the component 1 having a hat-shaped cross section in FIG. 5 by using a steel sheet A serving as a metal sheet having mechanical characteristics in Table 1. The component 1 having a hat-shaped cross section has a height of 90 mm. The punch shoulder portion 9 has a bending radius of 5 mm. The die shoulder portion 11 has a bending radius of 6 mm.

**Table 1**

| | Sheet thickness/mm | Yield strength/MPa | Tensile strength/MPa | Extension/% |
|---|---|---|---|---|
| Steel sheet A | 1.6 | 880 | 1210 | 13 |

As a result of measuring the shape after actual press forming, as illustrated in FIG. 6, angles changed at an R portion of the punch shoulder portion 9 and an R portion of the die shoulder portion 11. A portion most separated between a component shape immediately after press forming and spring back and a component shape in which stress has been relaxed after the spring back was defined as an evaluation point A. In the case, a separation amount of the evaluation point A (in case where top sheet portions 3 were aligned, distance from position of evaluation point A immediately after spring back to evaluation point A after elapse of two days) measured after the elapse of two days since the component was removed from a die after the press forming and subjected to the spring back was 16.0 mm as an actual separation amount.

Next, the shape of a hat-shaped component, in which stress has been relaxed after spring back, after the elapse of two days was predicted by performing forming simulation through the finite element method. Solid was used as an element type of the finite element method. The number of divisions in the sheet thickness direction and the number of elements in which stress was relaxed in the R portion of the punch shoulder portion 9 and the R portion of the die shoulder portion 11, which were bent portions, were changed to verify the effects of the present invention. Table 2 illustrates the verification results.

**Table 2**

| No. | Element type | Number of element divisions in sheet thickness direction | Position where stress is relaxed | Percentage at which stress is relaxed/% | Separation amount of evaluation point /mm | Difference from actual separation amount /mm |
|---|---|---|---|---|---|---|
| Comparative Example 1 | solid | 4 | Entire sheet thickness | 10 | 4 | 12 |
| Invention Example 1 | ↑ | ↑ | First surface layer | ↑ | 12 | 4 |
| Invention Example 2 | ↑ | 7 | ↑ | ↑ | 15 | 1 |
| Invention Example 3 | ↑ | ↑ | First and second surface layers | ↑ | 12 | 4 |

First, in Comparative Example 1, the number of divisions in the sheet thickness direction was set to four, and stresses in the entire sheet thickness direction were uniformly relaxed by 10%. A separation amount of the evaluation point A was 4 mm in a shape prediction result through forming simulation for the hat-shaped component in which stress was relaxed after the elapse of two days. This result was greatly different from the actual separation amount of 16 mm of the evaluation point A after the elapse of two days since actual pressing and spring back (difference of 12 mm from actual separation amount). Prediction accuracy of a temporal change after the spring back was low.

Next, in Invention Example 1, the number of divisions in the sheet thickness direction was set to four. Elements in the first sheet thickness surface layers (inside and outside) were selected on both sheet thickness surface sides. Stress was relaxed by 10%. As a result, the separation amount of the evaluation point A was predicted to be 12 mm. The separation amount was better than that in Comparative Example 1. The separation amount approached the actual separation amount of 16 mm of the evaluation point A after the elapse of two days since the actual pressing and the spring back (difference of 4 mm from actual separation amount).

In Invention Example 2, the number of divisions in the sheet thickness direction was set to seven. Elements in the first sheet thickness surface layers were selected on both sheet thickness surface sides. Stress was relaxed by 10%. As a result, the separation amount of the evaluation point A was predicted to be 15 mm. The separation amount was further better than those in Comparative Example 1 and Invention Example 1. The separation amount further approached the actual separation amount of 16 mm of the evaluation point A actually measured after the elapse of two days since the actual pressing and the spring back (difference of 1 mm from actual separation amount) .

In Invention Example 3, the number of divisions in the sheet thickness direction was set to seven. Elements in the first and second sheet thickness surface layers were selected on both sheet thickness surface sides. Stress was relaxed by 10%. As a result, the separation amount of the evaluation point A was predicted to be 12 mm. The separation amount was better than that in Comparative Example 1, and equivalent to that in Invention Example 1 (difference of 4 mm from actual separation amount).

### [Example 2]

Next, bending forming was performed on the component 21 having a Z-shaped cross section such that the component has a height of 80 mm and a punch shoulder portion 29 and a die shoulder portion 31 have bending radii of 4 mm and 5 mm, respectively. The component 21 having a Z-shaped cross section includes a top sheet portion 23, a vertical wall portion 25, and a flange portion 27 in FIG. 7. A portion most separated from a component shape was defined as an evaluation point B. In the case, a separation amount of the evaluation point B (in case where top sheet portions 23 were aligned, distance from position of evaluation point B immediately after spring back to evaluation point B after elapse of two days) measured after the elapse of two days since the component 21 having a Z-shaped cross section was removed from a die after the press forming and subjected to the spring back was 17.0 mm as an actual separation amount.

Next, the shape of a hat-shaped component after the elapse of two days since stress was relaxed after spring back was predicted by performing forming simulation through the finite element method. Shell was used as an element type of the finite element method. The number of divisions in the sheet thickness direction and the number of elements in which stress was relaxed were changed to verify the effects of the present invention. Table 3 illustrates the verification results.

**Table 3**

| No. | Element type | Number of element divisions in sheet thickness direction | Position where stress is relaxed | Percentage at which stress is relaxed/% | Separation amount of evaluation point /mm | Difference from actual separation amount /mm |
|---|---|---|---|---|---|---|
| Comparative Example 2 | shell | 5 | Entire sheet thickness | 20 | 6 | 11 |
| Invention Example 4 | ↑ | ↑ | First surface layer | ↑ | 10 | 7 |
| Invention Example 5 | ↑ | 9 | First surface layer | ↑ | 14 | 3 |
| Invention Example 6 | ↑ | ↑ | First and second surface layers | ↑ | 15 | 2 |
| Invention Example 7 | ↑ | ↑ | First to third surface layers | ↑ | 10 | 7 |

First, in Comparative Example 2, the number of divisions in the sheet thickness direction was set to five, and stresses of elements of the entire sheet thickness were uniformly relaxed by 20%. In a result of predicting the shape through forming simulation for the component 21 having a Z-shaped cross section in which stress was relaxed after the elapse of two days, the separation amount of the evaluation point B was 6 mm, and was greatly different from an actual separation amount 17 mm of the evaluation point B actually measured after the elapse of two days after spring back (difference of 11 mm from actual separation amount).

Next, in Invention Example 4, the number of divisions in the sheet thickness direction was set to five. Elements in the first sheet thickness surface layers were selected on both sheet thickness surface sides. Stress was relaxed by 20%. In a result of predicting the shape through forming simulation for the component 21 having a Z-shaped cross section in which stress was relaxed after the elapse of two days, the separation amount of the evaluation point B was 10 mm, and approached an actual separation amount 17 mm of the evaluation point B actually measured after the elapse of two days (difference of 7 mm from actual separation amount).

In Invention Example 5, the number of divisions in the sheet thickness direction was set to nine. Elements in the first sheet thickness surface layers were selected on both sheet thickness surface sides. Stress was relaxed by 20%. As a result, the separation amount of the evaluation point B was predicted to be 14 mm. The separation amount was better than those in Comparative Example 1 and Invention Example 4. The separation amount approached the actual separation amount of 17 mm of the evaluation point B actually measured after the elapse of two days since the actual pressing and the spring back (difference of 3 mm from actual separation amount).

In Invention Example 6, the number of divisions in the sheet thickness direction was set to nine. Elements in the first and second sheet thickness surface layers were selected on both sheet thickness surface sides. Stress was relaxed by 20%. As a result, the separation amount of the evaluation point B was predicted to be 15 mm. The separation amount was further better than those in Comparative Example 1, Invention Example 4, and Invention Example 5. The separation amount further approached the actual separation amount of 17 mm of the evaluation point B actually measured after the elapse of two days since the actual pressing and the spring back (difference of 2 mm from actual separation amount).

In Invention Example 7, the number of divisions in the sheet thickness direction was set to seven. Elements in the first to third sheet thickness surface layers were selected on both sheet thickness surface sides. Stress was relaxed by 20%. As a result, the separation amount of the evaluation point B was predicted to be 10 mm. The separation amount was better than that in Comparative Example 1, and equivalent to that in Invention Example 4 (difference of 7 mm from actual separation amount).

### [Example 3]

Next, an experiment was conducted on the component 41 having an L-shaped cross section, including a top sheet portion 43 and a vertical wall portion 45 in FIG. 8. The component has a height of 60 mm. A punch shoulder portion 49 has a bending radius of 5 mm. Bending forming was adopted as a press forming method. The shape after actual press forming was measured, and a portion most separated from a component shape was defined as an evaluation point C. As a result, a separation amount of the evaluation point C (in case where top sheet portions 43 were aligned, distance from position of evaluation point C immediately after spring back to evaluation point C after elapse of two days) measured after the elapse of two days since the L-shaped component was removed from a die after the press forming and subjected to spring back was 22.0 mm as an actual separation amount. Next, the shape of the component 41 having an L-shaped cross section after the elapse of two days since stress was relaxed after spring back was predicted by performing forming simulation through the finite element method. Solid was used as an element type of the finite element method. The number of divisions and the number of elements in which stress was relaxed were changed to verify the effects of the present invention. Table 4 illustrates the verification results.

**Table 4**

| No. | Element type | Number of element divisions in sheet thickness direction | Position where stress is relaxed | Percentage at which stress is relaxed/% | Separation amount of evaluation point /mm | Difference from actual separation amount /mm |
|---|---|---|---|---|---|---|
| Comparative Example 3 | Shell | 7 | Entire sheet thickness | 30 | 7 | 15 |
| Invention Example 8 | ↑ | ↑ | First surface layer | ↑ | 15 | 7 |
| Invention Example 9 | ↑ | 11 | First surface layer | ↑ | 17 | 5 |
| Invention Example 10 | ↑ | ↑ | First and second surface layers | ↑ | 16 | 6 |
| Invention Example 11 | ↑ | ↑ | First to third surface layers | ↑ | 14 | 8 |

First, in Comparative Example 3, the number of divisions in the sheet thickness direction was set to seven, and stresses of elements of the entire sheet thickness were uniformly relaxed by 30%. In a result of predicting the shape through forming simulation for the component having an L-shaped cross section in which stress was relaxed after the elapse of two days, the separation amount of the evaluation point C was 7 mm, and was greatly different from an actual separation amount 22 mm of the evaluation point C actually measured after the elapse of two days after spring back (difference of 15 mm from actual separation amount).

Next, in Invention Example 8, the number of divisions in the sheet thickness direction was set to seven. Elements in the first sheet thickness surface layers were selected on both sheet thickness surface sides. Stress was relaxed by 30%. In a result of predicting the shape through forming simulation for the component having an L-shaped cross section in which stress was relaxed after the elapse of two days, the separation amount of the evaluation point C was 15 mm, and approached an actual separation amount 22 mm of the evaluation point C actually measured after the elapse of two days (difference of 7 mm from actual separation amount).

In Invention Example 9, the number of divisions in the sheet thickness direction was set to 11. Elements in the first sheet thickness surface layers were selected on both sheet thickness surface sides. Stress was relaxed by 30%. As a result, the separation amount of the evaluation point C was predicted to be 17 mm. The separation amount was better than those in Comparative Example 3 and Invention Example 8. The separation amount further approached the actual separation amount of 22 mm of the evaluation point C actually measured after the elapse of two days since the actual pressing and the spring back (difference of 5 mm from actual separation amount).

In Invention Example 10, the number of divisions in the sheet thickness direction was set to 11. Elements in the first and second sheet thickness surface layers were selected on both sheet thickness surface sides. Stress was relaxed by 30%. As a result, the separation amount of the evaluation point C was predicted to be 16 mm. The separation amount was better than those in Comparative Example 3 and Invention Example 8 (difference of 6 mm from actual separation amount).

In Invention Example 11, the number of divisions in the sheet thickness direction was set to 11. Elements in the first to third sheet thickness surface layers were selected on both sheet thickness surface sides. Stress was relaxed by 30%. As a result, the separation amount of the evaluation point C was predicted to be 14 mm. The separation amount was better than those in Comparative Example 3 and Invention Example 8 (difference of 8 mm from actual separation amount).

### Industrial Applicability

According to the present invention, there can be provided a method of predicting a shape change of a press-formed product in which the shape change of the press-formed product having a bend with the elapse of time units after spring back is accurately predicted.

### Reference Signs List

- 1: COMPONENT HAVING A HAT-SHAPED CROSS SECTION

- 3: TOP SHEET PORTION
- 5: VERTICAL WALL PORTION
- 7: FLANGE PORTION
- 9: PUNCH SHOULDER PORTION
- 11: DIE SHOULDER PORTION
- 21: COMPONENT HAVING A Z-SHAPED CROSS SECTION
- 23: TOP SHEET PORTION
- 25: VERTICAL WALL PORTION
- 27: FLANGE PORTION
- 29: PUNCH SHOULDER PORTION
- 31: DIE SHOULDER PORTION
- 41: COMPONENT HAVING AN L-SHAPED CROSS SECTION
- 43: TOP SHEET PORTION
- 45: VERTICAL WALL PORTION
- 47: PUNCH SHOULDER PORTION

## Claims

1. A method of a forming simulation through a finite element method for predicting a shape change of a press-formed product, the method being configured to predict a shape change after elapse of time units of a press-formed product which has been obtained by performing press forming on a metal sheet and subjected to spring back at a moment when the metal sheet was removed from a die, the method comprising:
a generation step (S1) of generating a blank model which is an analysis model for a blank being a metal sheet used in press forming, the blank model being divided into a plurality of pieces in a sheet thickness direction such that the blank model can be analyzed;
an acquisition step (S3) of acquiring a shape and residual stress in the sheet thickness direction of the press-formed product immediately after the spring back by performing press forming analysis and spring back analysis using the blank model and a die model obtained by modeling a die used in the press forming;
a setting step (S5) of setting a value of residual stress relaxed and reduced as compared to the acquired residual stress of the press-formed product immediately after the spring back, to an element or an integration point of a sheet thickness surface layer of the press-formed product immediately after spring back;
a shape analysis step (S7) of determining a shape in which moment of force is balanced in the press-formed product for which a value of residual stress of only the sheet thickness surface layer has been set to be relaxed and reduced; and
using the shape analysis prediction result for manufacturing a component.

2. The method of predicting the shape change of the press-formed product according to claim 1, wherein, in the setting step (S5), residual stress of an element or an integration point of a sheet thickness surface layer of the press-formed product immediately after spring back is reduced and set at a predetermined percentage.

3. The method of predicting the shape change of the press-formed product according to claim 1 or 2, wherein, in the setting step (S5), residual stress is reduced and set at a predetermined percentage for a portion at which a metal sheet is subjected to bending deformation during the press forming.

4. The method of predicting the shape change of the press-formed product according to any one of claims 1 to 3, wherein the blank is a metal sheet having a tensile strength of 150 MPa-grade to 2000 MPa-grade.

## Patentansprüche

1. Umformungssimulationsverfahren durch eine Finite-Elemente-Methode zur Vorhersage einer Formänderung eines durch Pressen geformten Produkts, wobei das Verfahren so konfiguriert ist, dass eine Formänderung nach dem Verstreichen von Zeiteinheiten eines durch Pressen geformten Produkts vorhergesagt wird, das durch Durchführen des Pressformens auf einem Metallblech erhalten wurde und zu einem Zeitpunkt, zu dem das Metallblech aus einer Form entfernt wurde, einer Rückfederung unterworfen wurde, wobei das Verfahren Folgendes umfasst:
einen Erzeugungsschritt (S1) zum Erzeugen eines Modells eines Rohlings, das ein Analysemodell für einen Rohling ist, der ein beim Pressformen verwendetes Metallblech ist, wobei das Modell eines Rohlings in eine Vielzahl von Teilen in einer Blechdickenrichtung unterteilt ist, so dass das Modell eines Rohlings analysiert werden kann;
einen Erfassungsschritt zum Erfassen (S3) einer Form und einer Restspannung in der Blechdickenrichtung des durch Pressen geformten Produkts unmittelbar nach der Rückfederung durch Durchführen einer Pressformungs- und einer Rückfederungsanalyse unter Verwendung des Rohlings- und eines Gesenkmodells, das durch Modellieren eines Gesenks erhalten wird, das beim Pressformen verwendet wird;
einen Einstellschritt (S5) zum Einstellen eines Wertes der Restspannung, der im Vergleich zu der erfassten Restspannung des durch Pressen geformten Produkts unmittelbar nach der Rückfederung entspannt und reduziert ist, auf ein Element oder einen Integrationspunkt einer Blechdicken-Oberflächenschicht des durch Pressen geformten Produkts unmittelbar nach der Rückfederung;
einen Formanalyseschritt (S7) zum Bestimmen einer Form, in der das Kraftmoment im zu pressenden geformten Produkt ausgeglichen ist, für das ein Wert der Restspannung nur der Blechdicken-Oberflächenschicht festgelegt wurde, um entspannt und reduziert zu werden; und
Verwenden des Ergebnisses der Formanalyse-Vorhersage für die Herstellung eines Bauteils.

2. Verfahren zum Vorhersagen der Formänderung des nach Anspruch 1 durch Pressen geformten Produkts, wobei bei dem Einstellschritt (S5) die Restspannung eines Elements oder eines Integrationspunkts einer Blechdicken-Oberflächenschicht des durch Pressen geformten Produkts unmittelbar nach der Rückfederung reduziert und auf einen vorbestimmten Prozentsatz eingestellt wird.

3. Verfahren zum Vorhersagen der Formänderung des nach Anspruch 1 oder 2 durch Pressen geformten Produkts, wobei beim Einstellschritt (S5) die Restspannung reduziert und auf einen vorbestimmten Prozentsatz für einen Abschnitt eingestellt wird, bei dem ein Metallblech während des Pressformens einer Biegeverformung unterworfen wird.

4. Verfahren zum Vorhersagen der Formänderung des nach einem der Ansprüche 1 bis 3 durch Pressen geformten Produkts, wobei der Rohling ein Metallblech ist, das eine Zugfestigkeit von der Güte 150 MPa bis zur Güte 2000 MPa aufweist.

## Revendications

1. Procédé de simulation de formage par un procédé à éléments finis pour prédire un changement de forme d'un produit pressé, le procédé étant configuré pour prédire un changement de forme après l'écoulement d'unités de temps d'un produit formé à la presse qui a été obtenu par réalisation d'un formage à la presse sur une plaque métallique et soumis à un retour élastique à un moment où la plaque métallique a été retirée d'une matrice, le procédé comprenant :
une étape (S1) de génération pour générer un modèle d'ébauche qui est un modèle d'analyse pour une ébauche étant une plaque métallique utilisée dans le formage à la presse, le modèle d'ébauche étant divisé en une pluralité de pièces dans une direction d'épaisseur de plaque de sorte que le modèle d'ébauche puisse être analysé ;
une étape (S3) d'acquisition pour acquérir une forme et une contrainte résiduelle dans la direction d'épaisseur de plaque du produit formé à la presse immédiatement après le retour élastique en réalisant une analyse de formage à la presse et une analyse de retour élastique à l'aide du modèle d'ébauche et d'un modèle de matrice obtenu par modélisation d'une matrice utilisée dans le formage à la presse ;
une étape (S5) de détermination pour déterminer une valeur de contrainte résiduelle relâchée et réduite par rapport à la contrainte résiduelle acquise du produit formé à la presse immédiatement après le retour élastique, à un élément ou un point d'intégration d'une couche superficielle de l'épaisseur de plaque du produit formé à la presse immédiatement après le retour élastique ;
une étape (S7) d'analyse de forme pour déterminer une forme dans laquelle un moment de force est équilibré dans le produit formé à la presse pour lequel une valeur de contrainte résiduelle d'uniquement la couche superficielle de l'épaisseur de plaque a été réglée pour être relâchée et réduite ; et
en utilisant le résultat de prédiction de l'analyse de formage pour fabriquer un composant.

2. Procédé de prédiction de changement de forme du produit formé à la presse selon la revendication 1, dans lequel, dans l'étape (S5) de détermination, la contrainte résiduelle d'un élément ou d'un point d'intégration d'une couche superficielle de l'épaisseur de plaque du produit formé à la presse immédiatement après le retour élastique est réduite et réglée à un pourcentage prédéterminé.

3. Procédé de prédiction du changement de forme du produit formé à la presse selon la revendication 1 ou la revendication 2, dans lequel, dans l'étape (S5) de détermination, la contrainte résiduelle est réduite et réglée à un pourcentage prédéterminé pour une partie à laquelle une plaque métallique est soumise pour réaliser une déformation par flexion pendant le formage à la presse.

4. Procédé de prédiction du changement de forme du produit formé à la presse selon l'une quelconque des revendications 1 à 3, dans lequel l'ébauche est une plaque métallique ayant une résistance à la traction de 150 MPa à 2000 MPa.
